# EUROPÄISCHE PATENTSCHRIFT

(11) **EP 3 633 309 B1**
(45) Veröffentlichungstag und Bekanntmachung des Hinweises auf die Patenterteilung: **10.11.2021**
(21) Anmeldenummer: 19199753.5
(22) Anmeldetag: 26.09.2019
(51) Int. Cl.: F28F 19/00, B60K 11/08, B60R 19/52, B29C 45/00

(54) **BEFESTIGUNGSANORDNUNG FÜR EINEN WÄRMETAUSCHER**
FIXING ASSEMBLY FOR A HEAT EXCHANGER
DISPOSITIF DE FIXATION POUR UN ÉCHANGEUR DE CHALEUR

(30) Priorität: 02.10.2018 DE 102018124295
(43) Veröffentlichungstag der Anmeldung: 08.04.2020
(73) Patentinhaber: Volkswagen AG, 38440 Wolfsburg (DE)
(72) Erfinder: Ohlhoff, Jörg, 38446 Wolfsburg (DE); Stelzner, Robert, 38448 Wolfsburg (DE)
(74) Vertreter: karo IP

(56) Entgegenhaltungen:
- EP-A1- 1 974 973
- DE-A1- 10 242 468
- FR-A1- 2 961 132
- FR-A1- 3 057 945
- US-A1- 2014 132 033
- US-B2- 8 708 345

## Beschreibung

Die Erfindung betrifft eine Befestigungsanordnung für zumindest einen Wärmetauscher für ein Kraftfahrzeug.

Ein Wärmetauscher kann zur Führung eines Wärmetauscherfluids einen ersten Sammelkasten und einen zweiten Sammelkasten sowie zumindest eine Mehrzahl von Rohrleitungen umfassen, die sich jeweils von dem ersten Sammelkasten hin zum zweiten Sammelkasten erstrecken. Dabei können die Rohrleitungen zwischen den ersten und zweiten Sammelkästen so zueinander beabstandet angeordnet sein, dass sie für ein Fluid (z. B. Umgebungsluft) eine entlang einer Längsachse des Kraftfahrzeugs überströmbare Oberfläche aufweisen. Dabei findet ein Wärmeaustausch zwischen dem durch die Rohrleitungen geführten Wärmetauscherfluid und dem entlang einer axialen Richtung die Rohrleitungen überströmenden Fluid statt. Insbesondere wird der Wärmetauscher in Verbindung mit einer Lüfterzarge im Vorderwagen eines Kraftfahrzeugs angeordnet, wobei der Wärmetauscher regelmäßig in Fahrtrichtung räumlich vor einer Antriebseinheit des Kraftfahrzeugs und vor der Lüfterzarge verbaut ist.

Bei derartigen Befestigungsanordnungen sollten Spalten zwischen den einzelnen Komponenten, also z. B. Wärmetauscher und Lüfterzarge gegenüber einer Umgebung, abgedichtet werden, so dass vordefinierte Strömungswege z. B. der Umgebungsluft (beim Fahren des Kraftfahrzeuges) eingehalten werden und so eine Effizienz des Wärmetauschers maximierbar ist.

Aufgrund der zunehmenden technischen Anforderungen werden Kühlsysteme komplexer, wobei gleichzeitig vordefinierte Zustände genauer realisiert werden müssen (z. B. die Dichtkonzepte).

Aus der DE 101 31 321 B4, der FR 3 035 956 A1 und der US 2018/0120040 A1 sind jeweils Schutzgitter bekannt, die gegenüber der Fahrtrichtung des Kraftfahrzeugs vor dem Wärmetauscher angeordnet werden. Die Schutzgitter sollen eine Beschädigung des Wärmetauschers, z. B. durch Steinschlag, verhindern.

DE 102 42 468 A1 offenbart eine Befestigungsanordnung gemäß dem Oberbegriff von Anspruch 1.

Aufgabe der vorliegenden Erfindung ist es, die mit Bezug auf den Stand der Technik angeführten Probleme zumindest teilweise zu lösen. Insbesondere soll die Komplexität einer Befestigungsanordnung gering gehalten werden, wobei bevorzugt auch die gestiegenen Anforderungen hinsichtlich der Abdichtung und Kühlleistung erfüllt werden sollen.

Zur Lösung dieser Aufgaben trägt eine Befestigungsanordnung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Befestigungsanordnung für ein Kraftfahrzeug vorgeschlagen, zumindest aufweisend mindestens einen Wärmetauscher (siehe vorstehende Ausführungen zu Wärmetauschern; wobei der Wärmetauscher insbesondere ein Luft-Ladeluftkühler oder ein Kondensator ist) sowie ein Schutzelement für den mindestens einen Wärmetauscher, das mit einer für ein Fluid durchströmbaren Gitterstruktur eine für das Fluid überströmbare Oberfläche des mindestens einen Wärmetauschers zumindest teilweise überdeckt. Das Schutzelement ist ein durch ein Spritzgussverfahren hergestelltes Bauteil (Spritzguss-Bauteil) und weist mindestens ein in einem Mehrkomponenten-Verfahren an das Schutzelement angeformtes Abdichtelement für eine Strömungsführung des Fluids auf.

Das Kraftfahrzeug weist eine Längsachse (quer verlaufend zu den Radachsen), eine Querachse (quer verlaufend zur Längsachse) und eine Gierachse (quer zu Längsachse und Querachse; regelmäßig parallel zur Schwerkraft) auf. Im Folgenden wird davon ausgegangen, dass der mindestens eine Wärmetauscher im Kraftfahrzeug im Wesentlichen in einer von der Querachse und der Gierachse aufgespannten Ebene angeordnet ist. Weiter wird davon ausgegangen, dass der Wärmetauscher entlang einer axialen Richtung von einem Fluid (Umgebungsluft, strömt infolge der Bewegung des Kraftfahrzeugs in Fahrtrichtung im Wesentlichen entlang der Längsachse) durchströmt wird. Die im Folgenden verwendete axiale Richtung ist daher im Wesentlichen parallel zur Längsachse. Die im Folgenden verwendete radiale Richtung und die Umfangsrichtung erstrecken sich jeweils quer zur axialen Richtung und damit im Wesentlichen quer zur Längsachse. Die Begriffe der Achsen bzw. der angegebenen Richtungen werden im Folgenden auch für die Befestigungsanordnung verwendet, wobei von der erwähnten Orientierung der Befestigungsanordnung bzw. des mindestens einen Wärmetauschers ausgegangen wird. Sollte die Befestigungsanordnung bzw. der mindestens eine Wärmetauscher anders orientiert in dem Kraftfahrzeug angeordnet sein, gelten dann entsprechend anders orientierte Achsen bzw. Richtungen für die folgenden Ausführungen.

Die Befestigungsanordnung wird insbesondere in einem vorderen Bereich (gegenüber der üblichen Fahrtrichtung) des Kraftfahrzeugs angeordnet (im so genannten Vorderwagen). Die Befestigungsanordnung ist insbesondere in Fahrtrichtung räumlich vor einer Antriebseinheit des Kraftfahrzeugs verbaut.

Die Befestigungsanordnung kann über eine der im Folgenden angegebenen Komponente der Befestigungsanordnung und/oder über einen gesonderten Montageträger mit dem Kraftfahrzeug verbunden sein.

Das Spritzgießen ist ein Urformverfahren, das z. B. in der Kunststoffverarbeitung eingesetzt wird. Dabei wird mit einer Spritzgießmaschine der jeweilige Werkstoff verflüssigt (plastifiziert) und in eine Form, dem Spritzgießwerkzeug, unter Druck eingespritzt. Im Werkzeug geht der Werkstoff durch Abkühlung oder eine Vernetzungsreaktion in den festen Zustand über und kann nach dem Öffnen des Werkzeugs entnommen werden. Der Hohlraum, die Kavität, des Werkzeuges bestimmt dabei die Form und die Oberflächenstruktur des fertigen Teiles. Im Rahmen des Spritzgießverfahrens ist auch ein Mehrkomponenten-Verfahren durchführbar. Dabei werden mehrere unterschiedliche Materialien (Komponenten) dem Werkzeug zugeführt, so dass unterschiedliche Bereiche eines Werkstückes aus jeweils unterschiedlichen Materialien herstellbar sind, das Werkstück insgesamt aber einteilig herstellbar ist. Das Ergebnis ist ein Mehrkomponenten-Spritzguss-Bauteil, wobei die beiden Komponenten räumlich abgegrenzt voneinander vorliegen und unmittelbar miteinander verbunden, einteilig bzw. einstückig und/oder nicht zerstörungsfrei wieder voneinander trennbar sind.

Die Gitterstruktur erstreckt sich insbesondere zumindest über einen gegenüber der Schwerkraft unteren Teil des Wärmetauschers. Insbesondere erstreckt sich die Gitterstruktur über einen Großteil bzw. über die gesamte Breite (quer zur Längsachse) des Wärmetauschers. Insbesondere soll die Gitterstruktur einerseits den Wärmetauscher bzw. die Rohrleitungen des Wärmetauschers gegenüber einer mechanischen Beanspruchung z. B. durch Steinschlag schützen. Andererseits soll die Gitterstruktur gegenüber dem Fluid einen möglichst geringen Durchströmungswiderstand aufweisen. Insbesondere erstreckt sich die Gitterstruktur über mindestens 30 %, bevorzugt über mindestens 50 % der in Fahrtrichtung weisenden Fläche der Rohrleitungen des Wärmetauschers.

Vorliegend wird insbesondere vorgeschlagen, das Schutzelement durch ein zweiKomponenten-Verfahren herzustellen, wobei das mindestens eine Abdichtelement aus einem ersten Material und zumindest die Gitterstruktur aus einem davon unterschiedlichen zweiten Material besteht.

Insbesondere kann so ermöglicht werden, dass die Gitterstruktur aus einem für den Einsatzzweck vorgesehenen Material herstellbar ist, also insbesondere gegenüber Steinschlag eine ausreichende Festigkeit und geringe elastische Verformbarkeit aufweist. Demgegenüber weist insbesondere das mindestens eine Abdichtelement eine geringere Dichte und/oder eine geringere Wandstärke (geringere Ansprüche an die Festigkeit, daher leichtere Ausführung vorteilhaft) und/oder eine höhere elastische Verformbarkeit (bessere Verformung und damit flexiblere Anpassung an Kontaktoberflächen benachbarter Bauteile zur Ausbildung einer Abdichtung eines Strömungswegs des Fluids gegenüber einer Umgebung der Befestigungsanordnung) auf.

Insbesondere weist das mindestens eine Abdichtelement des Schutzelements einen geringeren Elastizitätsmodul als zumindest die Gitterstruktur des Schutzelements auf. Der Elastizitätsmodul beschreibt bei linear-elastischem Verhalten den proportionalen Zusammenhang zwischen Spannung und Dehnung bei der Verformung eines festen Körpers.

Insbesondere ist das Schutzelement zumindest teilweise, insbesondere zumindest die Gitterstruktur und/oder das mindestens eine Abdichtelement, aus einem oder aus mehreren unterschiedlichen Kunststoffen (Polymeren, ggf. faserverstärkt) hergestellt. Insbesondere besteht die Gitterstruktur (zumindest teilweise) aus bekanntem PA66-GF30, einem Polyamid. Insbesondere besteht das mindestens eine Abdichtelement aus bekanntem TPV-(EPDM und PP) oder aus bekanntem TPS-SBS.

Bevorzugt weist das Schutzelement zwischen dem mindestens einen Abdichtelement und der Gitterstruktur ein Rahmenteil auf. Insbesondere sind Gitterstruktur und das mindestens eine Abdichtelement über das Rahmenteil einstückig miteinander verbunden.

Insbesondere sind das Schutzelement und der mindestens eine Wärmetauscher zumindest über mindestens eine an dem Rahmenteil angeordnete erste Befestigung (unmittelbar) miteinander verbunden. Insbesondere umfasst die erste Befestigung eine Clipverbindung, eine Verschraubung, eine Klemmverbindung, eine Nietverbindung, eine Klebeverbindung oder Ähnliches.

Insbesondere werden Schutzelement und der mindestens eine Wärmetauscher über mindestens eine Zentriereinrichtung zueinander ausgerichtet, z. B. über einen Zentrierstift.

Insbesondere sind das Rahmenteil und die Gitterstruktur aus einem gleichen Material hergestellt.

Insbesondere bildet das Rahmenteil einen in einer Umfangsrichtung umlaufend geschlossen ausgeführten Rahmen aus.

Bevorzugt erstreckt sich das mindestens eine Abdichtelement zumindest teilweise entlang der Umfangsrichtung umlaufend geschlossen entlang des Rahmenteils. Insbesondere kann das mindestens eine Abdichtelement Öffnungen oder Schlitze aufweisen, so dass ein gewünschter Verlauf in Eckbereichen des Schutzelements ohne ungewünschte Verformung des Abdichtelements sichergestellt werden kann.

Alternativ oder zusätzlich können eine Mehrzahl von Abdichtelementen vorgesehen sein, die entlang der Umfangsrichtung voneinander beabstandet an dem Rahmenteil angeordnet sind.

Insbesondere erstreckt sich das mindestens eine Abdichtelement ausgehend von dem Rahmenteil zumindest in einer radialen Richtung nach außen.

Alternativ oder zusätzlich kann sich das mindestens eine Abdichtelement ausgehend von dem Rahmenteil zumindest in einer radialen Richtung nach innen erstrecken.

Weiter kann sich das Abdichtelement zumindest teilweise zusätzlich oder ausschließlich entlang der axialen Richtung erstrecken.

Insbesondere weist die Befestigungsanordnung zusätzlich zumindest einen Dichtungsträger sowie eine Lüfterzarge auf, wobei der Dichtungsträger einen sich entlang einer axialen Richtung erstreckenden Strömungsweg für das Fluid zwischen dem Wärmetauscher und der Lüfterzarge gegenüber einer Umgebung abdichtet.

Eine Lüfterzarge dient zur Aufnahme mindestens eines Lüfterrads, durch das ein Fluidstrom durch den Wärmetauscher gerade auch bei stillstehendem Kraftfahrzeug erzwungen werden kann.

Insbesondere soll ein Strömungsweg eines Fluids möglichst effektiv gegenüber einer Umgebung der Befestigungsanordnung abgedichtet werden, so dass ein Fluid nur über den Wärmetauscher und durch den Lüfter der Lüfterzarge strömen kann.

Insbesondere ist der Dichtungsträger mit dem Schutzelement über mindestens eine zweite Befestigung verbunden. Insbesondere umfasst die zweite Befestigung eine Clipverbindung, eine Verschraubung, eine Klemmverbindung, eine Nietverbindung, eine Klebeverbindung oder Ähnliches.

Insbesondere werden Dichtungsträger und der mindestens eine Wärmetauscher über mindestens eine Zentriereinrichtung zueinander ausgerichtet, z. B. über einen Zentrierstift.

Insbesondere ist der Dichtungsträger mit dem mindestens einen Wärmetauscher über mindestens eine dritte Befestigung verbunden. Insbesondere umfasst die dritte Befestigung eine Clipverbindung, eine Verschraubung, eine Klemmverbindung, eine Nietverbindung, eine Klebeverbindung oder Ähnliches.

Insbesondere werden Dichtungsträger und Schutzelement über mindestens eine Zentriereinrichtung zueinander ausgerichtet, z. B. über einen Zentrierstift.

Insbesondere ist die Lüfterzarge mit dem mindestens einen Wärmetauscher über mindestens eine vierte Befestigung verbunden. Insbesondere umfasst die vierte Befestigung eine Clipverbindung, eine Verschraubung, eine Klemmverbindung, eine Nietverbindung, eine Klebeverbindung oder Ähnliches.

Insbesondere werden Lüfterzarge und der mindestens eine Wärmetauscher über mindestens eine Zentriereinrichtung zueinander ausgerichtet, z. B. über einen Zentrierstift.

Es wird ein Kraftfahrzeug mit einer Antriebseinheit (z. B. eine elektrische Maschine, eine Verbrennungskraftmaschine oder Ähnliches) zum Antrieb des Kraftfahrzeuges und der beschriebenen Befestigungsanordnung vorgeschlagen. Die Befestigungsanordnung wird insbesondere in einem vorderen Bereich (gegenüber der üblichen Fahrtrichtung) des Kraftfahrzeugs angeordnet (Vorderwagen). Die Befestigungsanordnung ist insbesondere in Fahrtrichtung vor einer Antriebseinheit des Kraftfahrzeugs verbaut.

Durch die Ausgestaltung des Schutzelements bzw. der Befestigungsanordnung kann ein Fluid- bzw. Kühlluftnutzungsgrad in Abhängigkeit vom Kraftfahrzeug um bis zu 12 % gesteigert werden. Weiter kann eine Rezirkulation von warmem Fluid bzw. warmer Umgebungsluft vor dem mindestens einen Wärmetauscher durch den Lüfterlauf im Stand- bzw. Staubetrieb des Kraftfahrzeugs zumindest verbessert werden.

Die Ausführungen zu der Befestigungsanordnung sind insbesondere auf das Kraftfahrzeug übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Kraftfahrzeug in einer Seitenansicht;
- Fig. 2:: ein Schutzelement in einer perspektivischen Ansicht;
- Fig. 3:: eine Befestigungsanordnung in Explosionsdarstellung in einer perspektivischen Ansicht;
- Fig. 4:: die Befestigungsanordnung nach Fig. 3 in einer ersten perspektivischen Ansicht;
- Fig. 5:: die Befestigungsanordnung nach Fig. 3 und 4 in einer zweiten perspektivischen Ansicht;
- Fig. 6:: ein erstes Detail der Befestigungsanordnung nach Fig. 3 bis 5 in einer perspektivischen Ansicht; und
- Fig. 7:: ein zweites Detail der Befestigungsanordnung nach Fig. 3 bis 5 in einer perspektivischen Ansicht.

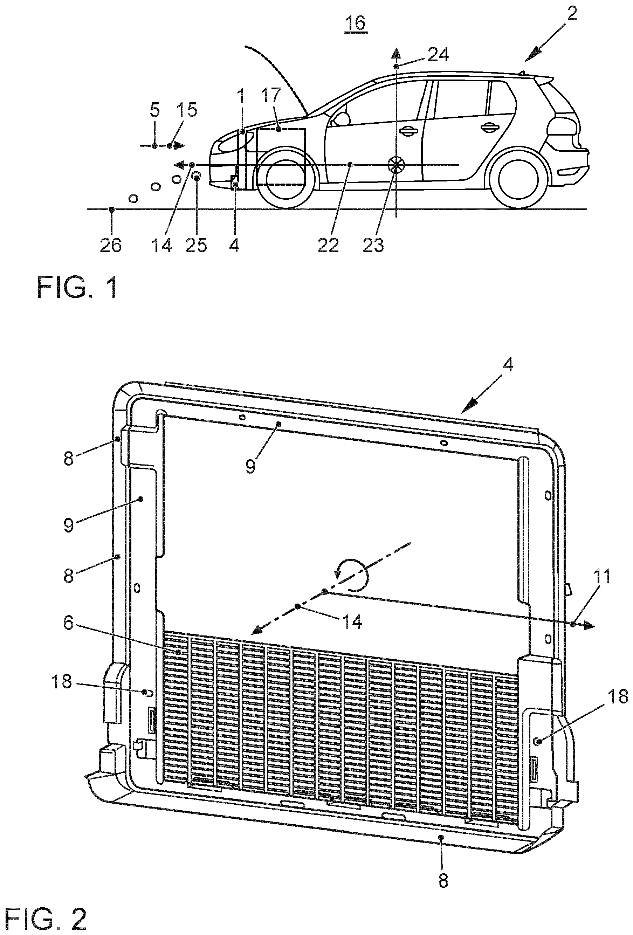

Die Fig. 1 zeigt ein Kraftfahrzeug 2 in einer Seitenansicht. Das Kraftfahrzeug 2 weist im Vorderwagen nacheinander eine Befestigungsanordnung 1 sowie eine Antriebseinheit 17 auf. Das Kraftfahrzeug 2 weist eine Längsachse 22, eine Querachse 23 sowie eine Gierachse 24 auf.

Ein Fluid 5 strömt entlang des Strömungswegs 15 das Kraftfahrzeug 2 (bei Bewegung des Kraftfahrzeugs 2 in Fahrtrichtung) parallel zur Längsachse 14 an. Das Fluid 5 beaufschlagt und überströmt bzw. durchströmt den Wärmetauscher 3 der Befestigungsanordnung 1. Ein Schutzelement 4 der Befestigungsanordnung 1 schützt den Wärmetauscher 3 vor Beschädigung durch Steine 25, die bei der Fahrt des Kraftfahrzeugs 2 entlang der Fahrbahn 26 aufgewirbelt werden können.

Fig. 2 zeigt ein Schutzelement 4 in einer perspektivischen Ansicht. Das Schutzelement 4 weist eine für ein Fluid 5 durchströmbare Gitterstruktur 6 auf, die eine für das Fluid 5 überströmbare Oberfläche des Wärmetauschers 3 zumindest teilweise überdeckt. Das Schutzelement 4 ist ein durch ein Spritzgussverfahren hergestelltes Bauteil und weist ein in einem Mehrkomponenten-Verfahren an das Schutzelement 4 angeformte Abdichtelement 8 für eine Strömungsführung des Fluids 5 auf.

Die Gitterstruktur 6 erstreckt sich über einen gegenüber der Schwerkraft (verläuft entlang der Gierachse 24, siehe Fig. 1) unteren Teil des Wärmetauschers 3. Die Gitterstruktur 6 erstreckt sich über die gesamte Breite (quer zur Längsachse 22) des Wärmetauschers 3. Das Schutzelement 4 weist zwischen dem Abdichtelement 8 und der Gitterstruktur 6 ein Rahmenteil 9 auf. Gitterstruktur 6 und Abdichtelement 8 sind über das Rahmenteil 9 einstückig miteinander verbunden. Das Rahmenteil 9 bildet einen in einer Umfangsrichtung 10 umlaufend geschlossen ausgeführten Rahmen aus. Das Abdichtelement 8 erstreckt sich ausgehend von dem Rahmenteil 9 zumindest in einer radialen Richtung 11 nach außen.

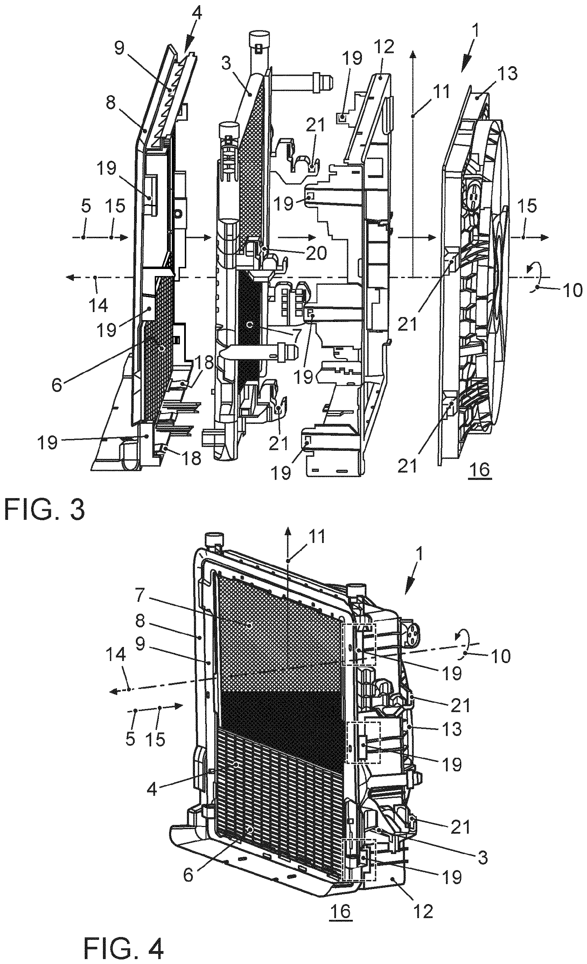

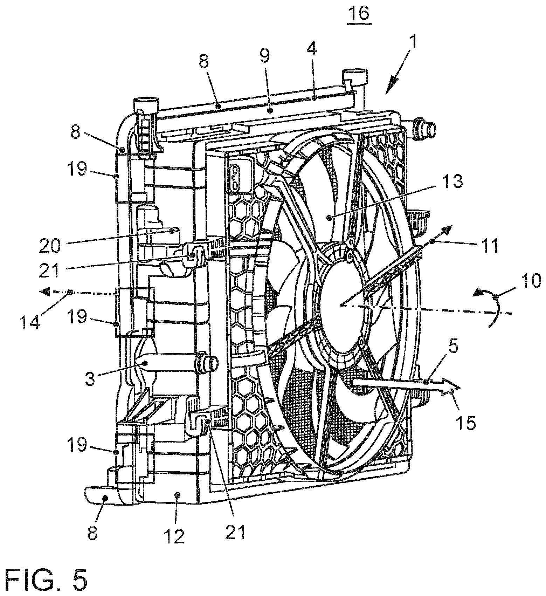

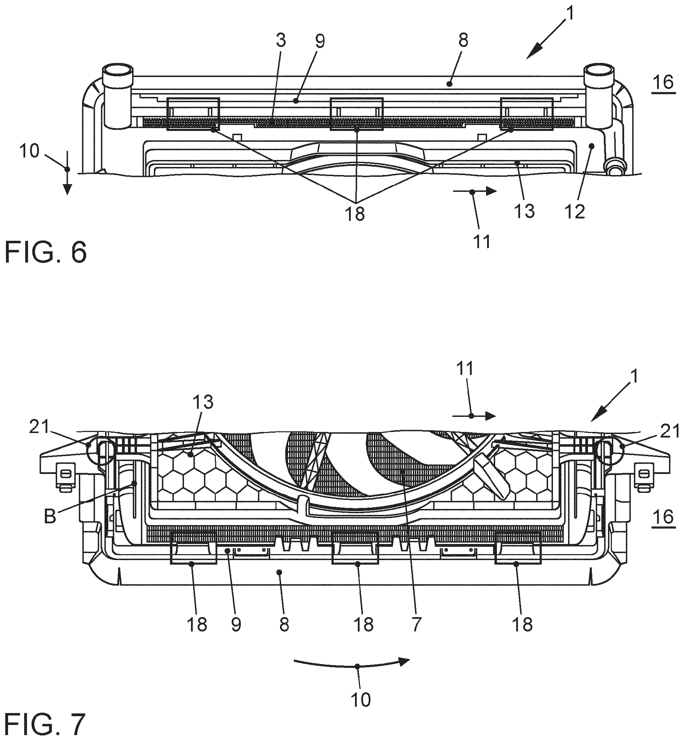

Fig. 3 zeigt eine Befestigungsanordnung 1 in Explosionsdarstellung in einer perspektivischen Ansicht. Fig. 4 zeigt die Befestigungsanordnung 1 nach Fig. 3 in einer ersten perspektivischen Ansicht. Fig. 5 zeigt die Befestigungsanordnung 1 nach Fig. 3 und 4 in einer zweiten perspektivischen Ansicht. Fig. 6 zeigt ein erstes Detail der Befestigungsanordnung 1 nach Fig. 3 bis 5 in einer perspektivischen Ansicht. Fig. 7 zeigt ein zweites Detail der Befestigungsanordnung 1 nach Fig. 3 bis 5 in einer perspektivischen Ansicht. Die Fig. 3 bis 7 werden im Folgenden gemeinsam beschrieben. Auf die Ausführungen zu Fig. 1 und 2 wird verwiesen.

Entlang des Strömungswegs 15 eines Fluids 5 weist die Befestigungsanordnung 1 nacheinander ein Schutzelement 4, einen Wärmetauscher 3, ein Dichtungsträger 12 sowie eine Lüfterzarge 13 auf, die miteinander zur Bildung eines ZSB (Zusammenbau bzw. Montageeinheit) verbindbar bzw. verbunden sind.

Das Schutzelement 4 und der Wärmetauscher 3 sind über an dem Rahmenteil 9 angeordnete erste Befestigungen 18 (unmittelbar) miteinander verbunden (siehe Fig. 3, 6 und 7).

Das Abdichtelement 8 erstreckt sich zumindest teilweise entlang der Umfangsrichtung 10 umlaufend geschlossen entlang des Rahmenteils 9. Dabei weist das Abdichtelement 8 Schlitze auf, so dass ein gewünschter Verlauf in Eckbereichen des Schutzelements 4 ohne ungewünschte Verformung des umlaufend geschlossen ausgebildeten Abdichtelements 8 sichergestellt werden kann.

Der Dichtungsträger 12 dichtet einen sich entlang einer axialen Richtung 14 erstreckenden Strömungsweg 15 für das Fluid 5 zwischen dem Wärmetauscher 3 und der Lüfterzarge 13 gegenüber einer Umgebung 16 ab.

Die Lüfterzarge 13 dient hier zur Aufnahme eines Lüfterrads, durch das ein Fluidstrom durch den Wärmetauscher 3 gerade auch bei stillstehendem Kraftfahrzeug 3 erzwungen werden kann.

Der Dichtungsträger 12 ist mit dem Schutzelement 4 über eine Mehrzahl von zweiten Befestigungen 19 verbunden (siehe Fig. 3, 4 und 5).

Der Dichtungsträger 12 ist weiterhin mit dem Wärmetauscher 3 über eine Mehrzahl von dritten Befestigungen 20 verbunden (siehe Fig. 3 und 5).

Die Lüfterzarge 13 ist mit dem Wärmetauscher 3 über eine Mehrzahl von vierten Befestigungen 21 verbunden (siehe Fig. 3, 4, 5 und 7).

### Bezugszeichenliste

- 1: Befestigungsanordnung
- 2: Kraftfahrzeug
- 3: Wärmetauscher
- 4: Schutzelement
- 5: Fluid
- 6: Gitterstruktur
- 7: Oberfläche
- 8: Abdichtelement
- 9: Rahmenteil
- 10: Umfangsrichtung
- 11: radiale Richtung
- 12: Dichtungsträger
- 13: Lüfterzarge
- 14: axiale Richtung
- 15: Strömungsweg
- 16: Umgebung
- 17: Antriebseinheit
- 18: erste Befestigung
- 19: zweite Befestigung
- 20: dritte Befestigung
- 21: vierte Befestigung
- 22: Längsachse
- 23: Querachse
- 24: Gierachse
- 25: Stein
- 26: Fahrbahn

## Patentansprüche

1. Befestigungsanordnung (1) für ein Kraftfahrzeug (2), zumindest aufweisend mindestens einen Wärmetauscher (3) sowie ein Schutzelement (4) für den mindestens einen Wärmetauscher (3), das mit einer für ein Fluid (5) durchströmbaren Gitterstruktur (6) eine für das Fluid (5) überströmbare Oberfläche (7) des mindestens einen Wärmetauschers (3) zumindest teilweise überdeckt, **dadurch gekennzeichnet, dass** das Schutzelement (4) ein Spritzguss-Bauteil ist und mindestens ein in einem Mehrkomponenten-Verfahren an das Schutzelement (4) angeformte Abdichtelement (8) für eine Strömungsführung des Fluids (5) aufweist.

2. Befestigungsanordnung (1) nach Patentanspruch 1, wobei das mindestens eine Abdichtelement (8) des Schutzelements (4) zumindest
• eine geringere Dichte,
• eine geringere Wandstärke oder
• eine höhere elastischen Verformbarkeit
als zumindest die Gitterstruktur (6) des Schutzelements (4) aufweist.

3. Befestigungsanordnung (1) nach einem der vorhergehenden Patentansprüche, wobei das Schutzelement (4) zwischen dem mindestens einen Abdichtelement (8) und der Gitterstruktur (6) ein Rahmenteil (9) aufweist.

4. Befestigungsanordnung (1) nach Patentanspruch 3, wobei das Schutzelement (4) und der mindestens eine Wärmetauscher (3) zumindest über mindestens eine am Rahmenteil (9) angeordnete erste Befestigung (18) miteinander verbunden sind.

5. Befestigungsanordnung (1) nach Patentanspruch 3, wobei das Rahmenteil (9) und die Gitterstruktur (6) aus einem gleichen Material sind.

6. Befestigungsanordnung (1) nach einem der vorhergehenden Patentansprüche 3 und 4, wobei das Rahmenteil (9) einen in einer Umfangsrichtung (10) umlaufend geschlossen ausgeführten Rahmen ausbildet.

7. Befestigungsanordnung (1) nach Patentanspruch 6, wobei sich das mindestens eine Abdichtelement (8) zumindest teilweise entlang der Umfangsrichtung (10) umlaufend geschlossen entlang des Rahmenteils (9) erstreckt.

8. Befestigungsanordnung (1) nach einem der vorhergehenden Patentansprüche, wobei sich das mindestens eine Abdichtelement (8) ausgehend von dem Rahmenteil (9) zumindest in einer radialen Richtung (11) nach außen erstreckt.

9. Befestigungsanordnung (1) nach einem der vorhergehenden Patentansprüche, wobei die Befestigungsanordnung (1) zusätzlich zumindest einen Dichtungsträger (12) sowie eine Lüfterzarge (13) aufweist, wobei der Dichtungsträger (12) einen sich entlang einer axialen Richtung (14) erstreckenden Strömungsweg (15) für das Fluid (5) zwischen dem mindestens einen Wärmetauscher (3) und der Lüfterzarge (13) gegenüber einer Umgebung (16) abdichtet.

10. Befestigungsanordnung (1) nach Patentanspruch 9, wobei der Dichtungsträger (12) über mindestens eine zweite Befestigung (19) mit dem Schutzelement (4) verbunden ist.

11. Befestigungsanordnung (1) nach einem der vorhergehenden Patentansprüche 9 und 10, wobei der Dichtungsträger (12) über mindestens eine dritte Befestigung (20) mit dem mindestens einen Wärmetauscher (3) verbunden ist.

12. Befestigungsanordnung (1) nach einem der vorhergehenden Patentansprüche 9 bis 11, wobei die Lüfterzarge (13) über mindestens eine vierte Befestigung (21) mit dem mindestens einen Wärmetauscher (3) verbunden ist.

13. Kraftfahrzeug (2) mit einer Antriebseinheit (17) zum Antrieb des Kraftfahrzeuges (2) und einer Befestigungsanordnung (1) nach einem der vorhergehenden Patentansprüche 1 bis 12.

## Claims

1. Fastening arrangement (1) for a motor vehicle (2), at least having at least one heat exchanger (3) and a protective element (4) for the at least one heat exchanger (3), which protective element at least partially covers, with a grid structure (6) through which a fluid (5) can flow, a surface (7) of the at least one heat exchanger (3), over which surface the fluid (5) can flow, **characterized in that** the protective element (4) is an injection-moulded component and has at least one sealing element (8) for flow guidance of the fluid (5), which sealing element is moulded onto the protective element (4) in a multi-component process.

2. Fastening arrangement (1) according to Patent Claim 1, wherein the at least one sealing element (8) of the protective element (4) has at least
• a lower density,
• a smaller wall thickness, or
• a higher elastic deformability
than at least the grid structure (6) of the protective element (4).

3. Fastening arrangement (1) according to either of the preceding patent claims, wherein the protective element (4) has a frame part (9) between the at least one sealing element (8) and the grid structure (6).

4. Fastening arrangement (1) according to Patent Claim 3, wherein the protective element (4) and the at least one heat exchanger (3) are connected to one another at least via at least one first fastening (18) which is arranged on the frame part (9).

5. Fastening arrangement (1) according to Patent Claim 3, wherein the frame part (9) and the grid structure (6) are composed of an identical material.

6. Fastening arrangement (1) according to either of the preceding Patent Claims 3 and 4, wherein the frame part (9) forms a frame which is formed so as to be closed peripherally in a circumferential direction (10).

7. Fastening arrangement (1) according to Patent Claim 6, wherein the at least one sealing element (8) extends along the frame part (9) so as to be closed peripherally at least partially along the circumferential direction (10).

8. Fastening arrangement (1) according to one of the preceding patent claims, wherein, proceeding from the frame part (9), the at least one sealing element (8) extends outwards at least in a radial direction (11).

9. Fastening arrangement (1) according to one of the preceding patent claims, wherein the fastening arrangement (1) additionally has at least a seal support (12) and a fan shroud (13), wherein the seal support (12) seals off a flow path (15) for the fluid (5), which flow path extends along an axial direction (14), between the at least one heat exchanger (3) and the fan shroud (13) with respect to surroundings (16).

10. Fastening arrangement (1) according to Patent Claim 9, wherein the seal support (12) is connected to the protective element (4) via at least one second fastening (19).

11. Fastening arrangement (1) according to either of the preceding Patent Claims 9 and 10, wherein the seal support (12) is connected to the at least one heat exchanger (3) via at least one third fastening (20).

12. Fastening arrangement (1) according to one of the preceding Patent Claims 9 to 11, wherein the fan shroud (13) is connected to the at least one heat exchanger (3) via at least one fourth fastening (20).

13. Motor vehicle (2) having a drive unit (17) for driving the motor vehicle (2) and having a fastening arrangement (1) according to one of the preceding Patent Claims 1 to 12.

## Revendications

1. Agencement de fixation (1) pour un véhicule automobile (2), au moins présentant au moins un échangeur de chaleur (3) ainsi qu'un élément de protection (4) pour ledit au moins un échangeur de chaleur (3), qui recouvre au moins partiellement avec une structure de grille (6) pouvant être traversée par un fluide (5) une surface (7) pouvant être traversée par le fluide (5) du au moins un échangeur de chaleur (3),
**caractérisé en ce que** l'élément de protection (4) est une pièce moulée par injection et présente au moins un élément d'étanchéité (8) rapporté à l'élément de protection (4) par un procédé multicomposants pour guider l'écoulement du fluide (5).

2. Agencement de fixation (1) selon la revendication 1, dans lequel ledit au moins un élément d'étanchéité (8) de l'élément de protection (4) présente au moins
• une densité inférieure,
• une épaisseur de paroi inférieure, ou
• une capacité de déformation élastique plus élevée
qu'au moins la structure de grille (6) de l'élément de protection (4).

3. Agencement de fixation (1) selon l'une quelconque des revendications précédentes, dans lequel l'élément de protection (4) présente une partie de cadre (9) entre ledit au moins un élément d'étanchéité (8) et la structure de grille (6).

4. Agencement de fixation (1) selon la revendication 3, dans lequel l'élément de protection (4) et ledit au moins un échangeur de chaleur (3) sont reliés l'un à l'autre au moins par l'intermédiaire d'au moins une première fixation (18) disposée sur la partie de cadre (9).

5. Agencement de fixation (1) selon la revendication 3, dans lequel la partie de cadre (9) et la structure de grille (6) sont réalisées dans un même matériau.

6. Agencement de fixation (1) selon l'une quelconque des revendications précédentes 3 et 4, dans lequel la partie de cadre (9) forme un cadre réalisé de manière fermée en périphérie dans une direction circonférentielle (10).

7. Agencement de fixation (1) selon la revendication 6, dans lequel ledit au moins un élément d'étanchéité (8) s'étend au moins partiellement le long de la partie de cadre (9) de manière fermée en périphérie le long de la direction circonférentielle (10).

8. Agencement de fixation (1) selon l'une quelconque des revendications précédentes, dans lequel ledit au moins un élément d'étanchéité (8) s'étend en partant de la partie de cadre (9) au moins dans une direction radiale (11) vers l'extérieur.

9. Agencement de fixation (1) selon l'une quelconque des revendications précédentes, l'agencement de fixation (1) présentant en outre au moins un support de joint d'étanchéité (12) ainsi qu'un châssis de ventilateur (13), le support de joint d'étanchéité (12) rendant un trajet d'écoulement (15) s'étendant le long d'une direction axiale (14) pour le fluide (5) entre ledit au moins un échangeur de chaleur (3) et le châssis de ventilateur (13) étanche par rapport à un environnement (16).

10. Agencement de fixation (1) selon la revendication 9, dans lequel le support de joint d'étanchéité (12) est relié à l'élément de protection (4) par l'intermédiaire d'au moins une deuxième fixation (19).

11. Agencement de fixation (1) selon l'une quelconque des revendications précédentes 9 et 10, dans lequel le support de joint d'étanchéité (12) est relié audit au moins un échangeur de chaleur (3) par l'intermédiaire d'au moins une troisième fixation (20).

12. Agencement de fixation (1) selon l'une quelconque des revendications précédentes 9 à 11, dans lequel le châssis de ventilateur (13) est relié audit au moins un échangeur de chaleur (3) par l'intermédiaire d'au moins une quatrième fixation (21).

13. Véhicule automobile (2) comprenant une unité d'entraînement (17) pour entraîner le véhicule automobile (2) et un agencement de fixation (1) selon l'une quelconque des revendications précédentes 1 à 12.
